# EUROPEAN PATENT APPLICATION

(11) **EP 0 820 127 A1**
(43) Date of publication of application: **21.01.1998**
(21) Application number: 97110405.4
(22) Date of filing: 25.06.1997
(51) Int. Cl.: H01S 3/06, H04B 10/17

(54) **Arrangement for reducing insertion loss impairment of optical amplifiers**

(30) Priority: 26.06.1996 US 670477
(71) Applicant: AT&T Corp., New York, NY 10013-2412 (US)
(72) Inventor: Kerfoot, Franklin W. III, Red Bank, New Jersey 07701 (US)
(74) Representative: KUHNEN, WACKER & PARTNER

(57) **Abstract**

An optical fiber amplifier is provided that includes first and second doped optical fiber portions. A directional coupler is adapted to couple pump power to the first and second doped optical fiber portions. An additional optical component is adapted to transmit a substantial portion of the pump power. The optical component also has undesirable attenuating properties at the optical signal wavelength. The optical component is situated between first and second doped optical fiber portions and optically couples the first doped portion to the second doped portion. An optical input port is adapted to couple optical signals to the first and second doped optical fiber portions. An optical output port is coupled to receive an amplified optical signal from the second doped optical fiber portion. An optical pump source is coupled to the directional coupler for providing the pump power.

## Description

### Field of the Invention

This invention relates generally to optical fiber amplifiers and more particularly to optical fiber amplifiers in which performance impairment due to insertion loss is reduced.

### Background of the Invention

In the design of electronic systems that employ electronic amplifiers, additional components are sometimes required that may either precede or follow the amplifier. An illustrative example of such an additional component is a filter to shape the frequency response of the amplifier. Typically, the additional component functions to some extent as an attenuator. In determining the optimal location of the additional component with respect to the amplifier, the designer must take into account that if the additional component precedes the amplifier, the overall noise figure of the system increases by the value of the attenuation. Alternatively, if the additional component follows the amplifier the noise impairment of the system is minimized, but at the expense of reduced power output equal to the value of the attenuation.

Accordingly, to minimize impairment of both the noise figure and the power output, the attenuating component is sometimes placed between two distinct amplification stages. One problem with this arrangement is that the system now requires two electronic amplifiers when one would have otherwise sufficed.

### Summary of the Invention

The present inventor has realized that in the optical domain, optical systems employing EDFAs may be designed in which the impairment of both the noise figure and the power output is minimized without requiring the addition of a second optical amplifier.

In accordance with the present invention, an optical fiber amplifier is provided that includes first and second doped optical fiber portions. A directional coupler is adapted to couple pump power to the first and second doped optical fiber portions. An additional optical component is adapted to transmit a substantial portion of the pump power. The optical component also has undesirable attenuating properties at the optical signal wavelength. The optical component is situated between first and second doped optical fiber portions and optically couples the first doped portion to the second doped portion. An optical input port is adapted to couple optical signals to the first and second doped optical fiber portions. An optical output port is coupled to receive an amplified optical signal from the second doped optical fiber portion. An optical pump source is coupled to the directional coupler for providing the pump power.

### Brief Description of the Drawings

FIG. 1 shows a prior art optical fiber amplifier.
FIG. 2 shows an embodiment of the optical amplifier constructed in accordance with the present invention in which an attenuating component is located to reduce its impairment of optical amplifier performance.
FIG. 3 shows an exemplary transmission system including a transmitter, receiver, transmission path and an optical amplifier in which an attenuating component is situated in accordance with the present invention

### Detailed Description

Rare earth doped fiber amplifiers for amplifying weak signals for both local and trunk optical telecommunication networks are of particular interest because of their low insertion loss, broad gain bandwidth and polarization insensitive gain. In use, the doped optical fiber is normally coupled to a pump so that a web optical input signal at some wavelength within the rare earth gain profile experiences a desired amplification. Pump light, which can be coupled into the optical fiber via a directional coupler, may propagate either co-directionally or contra-directionally within the fiber relative to the signal. The directional coupler has a high coupling ratio at the pump wavelength and a low coupling ratio at the signal wavelength for the path through which the pump light propagates. The directional coupler also has a low coupling ratio at the pump wavelength and a high coupling ratio at the signal wavelength for the path through which the signal propagates.

Erbium-doped optical amplifiers, when used as power amplifiers, repeaters and preamplifiers in light-wave systems have been responsible for significant improvement in the performance of long-distance transmission systems, networks, CATV distribution and the like. Important features of these amplifiers include high gain, low noise and high saturated output power.

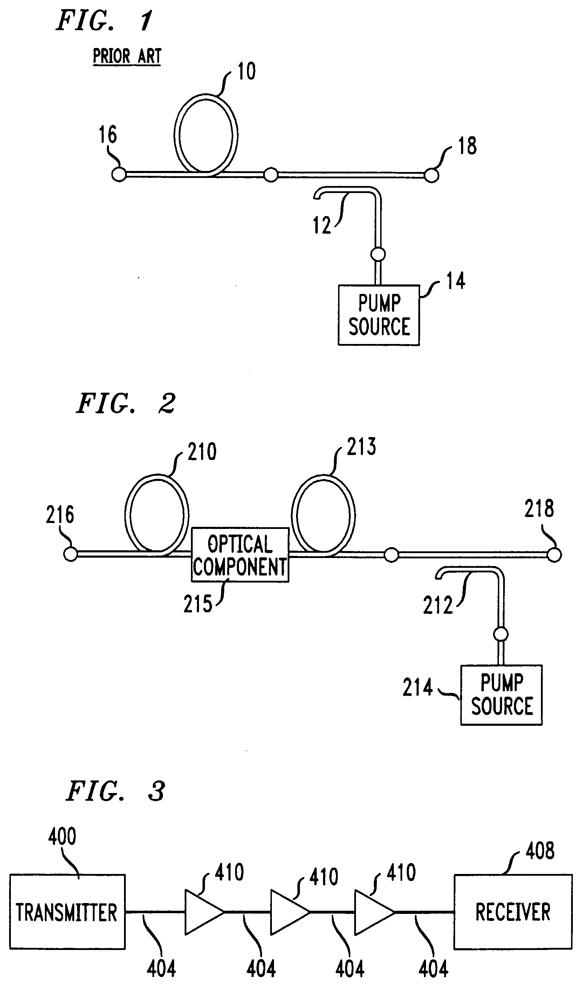

Referring to FIG. 1, there is illustrated a prior art erbium-doped fiber amplifier. As illustrated in Fig. 1, an optical fiber amplifier comprises an optical fiber 10 doped with a rare earth element such as erbium coupled via a directional coupler 12 to a source of pump power 14. The doped optical fiber 10 supports an input port 16 adapted to receive an optical signal which requires amplification and an output port 18 adapted to couple the signal which has been amplified to an optical fiber for transmission to a remote location. The source of pump power 14 typically includes a laser diode coupled to the directional coupler 12.

Similar to the design of electronic systems such as previously described, additional optical components are sometimes required that may either precede or follow the optical amplifier. In analogy with the electronic domain, the optical component, which has attenuating properties at the signal wavelength, may be placed between the optical amplifier and input port 16 or, alternatively, between the optical amplifier and the output port 18. While the attenuation provided by the optical component may be necessary for the component's operation (such as in a filter, for example), it is often necessary to compensate for the intentional attenuation by increasing the gain of the amplifier.

Referring to FIG. 2, there is shown an optical system that includes an optical amplifier and an additional optical component arranged to minimize impairment of both the noise figure and the power output. The additional component may be any device that attenuates the optical signal and has relatively low loss at the pump wavelength. An example of such a device is a filter employed to equalize the gain shape of the amplifier. The optical fiber amplifier includes first and second optical fiber portions 210 and 213 that are each doped with a rare earth element such as erbium. The optical fibers 210 and 213 are coupled to a common pump power source 214 via a directional coupler 212. The first and second optical fibers 210 and 213 collectively provide the total gain required from the amplifier.

In accordance with the present invention, the additional optically attenuating component, designated in FIG. 2 by reference numeral 215, is inserted between the first and second optical fiber portions 210 and 213. For a given level of gain, the total length of the first and second doped optical fiber portions that is required is substantially the same as the length of the doped optical fiber shown in FIG. 1. The configuration shown in FIG. 2 substantially reduces the noise figure of the system relative to the amplifier shown in FIG. 1 when the additional component precedes the optical fiber 10. Moreover, the configuration shown in FIG. 2 also increases the power output of the system relative to the amplifier shown in FIG. 1 when the additional component follows the optical fiber 10. The inventive arrangement provides these advantages without requiring a second optical fiber amplifier. That is, the additional component is located so as to enhance performance without requiring a second directional coupler, a second pump power source and additional length of doped optical fiber.

FIG. 3 is an example of a transmission system including a transmitter, receiver, and transmission path in accordance with the present invention. Shown are transmitter 400, a chain of optical fiber amplifiers 410, at least one of which embodies the characteristics of the arrangement shown in FIG. 2, and transmission medium 404, which connects receiver 408 to transmitter 400. Transmission medium 404, for purposes of this example, but not as a limitation on the invention, is a single-mode optical fiber. These elements are well known in the art.

The foregoing illustrates the principles of the invention and those skilled in the art will be able to devise numerous arrangements which, although not explicitly shown or described herein, embody the principles of the invention.

## Claims

1. An optical fiber amplifier comprising:
first and second doped optical fiber portions;
a directional coupler adapted to couple pump power to said first and second doped optical fiber portions;
an optical component adapted to transmit a substantial portion of the pump power and having attenuating properties at an optical signal wavelength, said optical component optically coupling said first doped optical fiber portion to said second doped optical fiber portion;
an optical input port adapted to couple optical signals to said first doped optical fiber portion;
an optical output port coupled to receive an amplified optical signal from said second doped optical fiber portion;
an optical pump source coupled to the directional coupler for providing the pump power.

2. The optical amplifier of claim 1 wherein said first and second doped optical fiber portions are doped with erbium.

3. The optical amplifier of claim 1 wherein said optical pump source comprises a laser diode.

4. The optical umplifier of claim 1 wherein said optical component transmits a majority of the pump power.

5. An optical transmission system comprising:
an optical transmitter;
an optical receiver;
an optical transmission medium optically coupling said transmitter to said receiver;
at least one optical fiber amplifier disposed in said optical transmission medium, said optical fiber amplifier including;
first and second doped optical fiber portions;
a directional coupler adapted to couple pump power to said first and second doped optical fiber portions;
an optical component adapted to transmit a substantial portion of the pump power and having attenuating properties at an optical signal wavelength, said optical component optically coupling said first doped optical fiber portion to said second doped optical fiber portion;
an optical input port adapted to couple optical signals to said first doped optical fiber portion;
an optical output port coupled to receive an amplified optical signal from said second doped optical fiber portion;
an optical pump source coupled to the directional coupler for providing the pump power.

6. The system of claim 5 wherein said optical transmission medium comprises single-mode optical fiber.
